# EUROPEAN PATENT APPLICATION

(11) **EP 0 555 842 A1**
(43) Date of publication of application: **18.08.1993**
(21) Application number: 93102135.6
(22) Date of filing: 11.02.1993
(51) Int. Cl.: G01T 1/204, G01N 1/28, B01F 11/02

(54) **A method of dissolving biological tissue**

(30) Priority: 14.02.1992 JP 75098/92
(71) Applicant: JAPAN SCIENCE, INC., Nerima-ku Tokyo 176 (JP)
(72) Inventor: Ishikawa, Hiroaki, Nerima-ku, Tokyo 176 (JP)
(74) Representative: Bühling, Gerhard, Dipl.-Chem.

(57) **Abstract**

This invention is a technique to dissolve the biological tissue used for liquid scintillation measurement. Many samples of tissue can be simultaneously dissolved very rapidly using acid or alkali, cavitation caused by powerful ultrasonic emission, high temperature and large surface area of horns. The big problem in this field has been solved by this invention.

## Description

### BACKGROUND OF THE INVENTION

### 1. Field of the Invention

This invention concerns a dissolving method of biological tissue including radioisotopes.

### 2. Description of the Prior Art

In liquid scintillation measurement, biological tissue which includes radioisotopes must be dissolved in order to detect beta-rays emitted from the radioisotopes. 100-300 mg of biological tissue, which is placed in a sample vial together with 1 ml of the reagent such as quaternary hydroxide ammonium compound, sodium hydroxide, nitric acid, hydrogen peroxide or perchloric acid, dissolves very slowly by chemical reaction. In this case, it takes a very long time, for instance, several hours until complete solution. This dissolving method is referred to the book, Hiroaki Ishikawa; "Modern Liquid Scintillation Measurement Method" (Nangando, Japan 1992).

It has been a big problem in this field that the biological tissue needs such a long time for solution.

Alternatively, there is a method for dissolving biological matter such as a cell or tissue with ultrasonics. The sample and water in a vessel are, from outside or inside of the vessel, subjected to ultrasonic waves. The sample is, however, restricted to only the cell or very tiny tissue. The biological tissue of more than 100 mg can't be dissolved within 10 min.

This fact is due to the following reasons. Namely, after solution of the sample with the ultrasonic waves, the dissolved sample is chemically analyzed, so that liquids other than water can't be used as a medium of ultrasonic transmission in the vessel. Furthermore, the sample is sometimes cooled with water-flow outside of the vessel to eliminate a change in quality of the sample.

This method is not used for the biological tissue containing radioisotopes, because a chemical analysis is not required for the dissolved tissue.

### SUMMARY OF THE INVENTION

The following explains a sample preparation of the biological tissue concerning the liquid scintillation measurement.

When the radioisotopes are injected into a rat as a tracer, we can learn how the radioisotopes distribute inside the rat's body through the measurement of the radioisotopes that exist in it's tissues. The tissues taken out of the body must be dissolved to form liquid. The dissolved tissues can be homogeneously mixed with a liquid scintillator to obtain an accurate measurement of the radioactivity of the radioisotope.

The liquid scintillator which consists of an organic fluorescent material, Xylene (or toluene) and a surfactant serves as a detector of the radioisotope to convert radiation energy into photons.

The biological tissue is placed together with the reagent such as acid or alkali in the sample vial, and then subjected to the ultrasonic radiation. The ultrasonic radiation gives rise, in the reagent, to the cavitation which forms numerous small bubbles. In short time, the bubbles break to release impulsive energy equivalent to several hundred torr. The impulsive energy not only enhances the temperature of the reagent up to more than 50°C within 10 min, but also destroys the tissue. The chemical reaction of the tissue with the reagent is remarkably accelerated through the high temperature.

Namely, the two kinds of forces of the accelerated chemical reaction and the impulsive destruction act simultaneously on the tissue to lead to its rapid solution. These forces make from 100 to 300 mg of tissue dissolve within 10 min.

The sample vial is confined to a specific one normalized for the liquid scintillation measurement. It is made of glass, polyethylene, Teflon, quartz or nylon. It has been proved that the ultrasonic radiation passes through the polyethylene more efficiently than other materials. Hence, the polyethylene vial is always used in this invention.

The purpose of this invention is to dissolve simultaneously many biological samples within 10 min, each of which weighes more than 100 mg. The following means were otilised to accomplish the purpose.
(1) The use of the reagent such as acid or alkali.
(2) Increasing the temperature of the reagent up to more than 50°C.
(3) Powerful cavitation and large area caused by using several combinations of vibrating elements with horns.
(4) The employment of the polyethylene vial.

Several series of combinations between electro-strictive typed vibrating elements and the horns can provide large surface area which generates powerful ultrasonic radiation per unit area. The large surface area of the horns makes it possible for many samples to be simultaneously ultrasonically irradiated.

### BRIEF DESCRIPTION OF THE DRAWINGS

Fig. 1 is a vertical sectional view illustrating ultrasonic irradiation to biological sample.

Fig. 2 is a vertical sectional view representing the disposition of BLT, horns and sample vials.

Fig. 3 is a block diagram showing the process from AC input to ultrasonic emission.

### DESCRIPTION OF THE PREFERRED EMBODIMENT

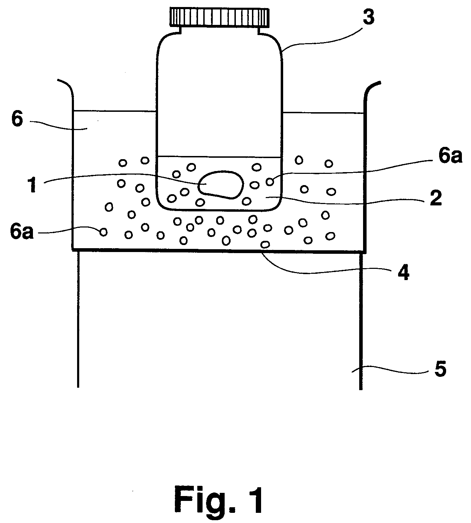

As shown in Fig. 1, the biological tissue 1 weighing from 100 to 300 mg such as muscle, liver, spleen, skin, hair or bone is placed together with 1 ml of 2N sodium hydroxide 2 in the polyethylene vial 3. The vial 3 has a cylindrical shape and is 27 mm in diameter and 62 mm in height with a screw cap.

The ultrasonic emission from the surface 4 of the horn 5 irradiates the water 6 and the 2N sodium hydroxide 2 to generate the cavitation 6a inside these liquids. The irradiation for 10 min increases the temperature of the liquids up to about 60°C.

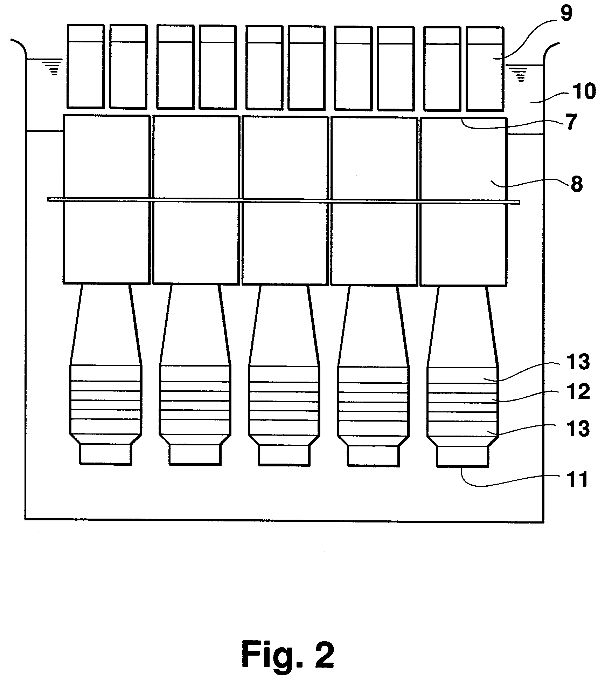

As illustrated in Fig. 2, the surface 7 of the horns 8 having area of 180 cm² is designed to accommodate a maximum of 20 vials 9. The water 10 supplied on the surface 7 of the horns 8 serves as an ultrasonic medium which couples the surface 7 to the vials 9.

The ultrasonic radiation of 21 KHz which creates effective cavitation is generated from a vibrating element of a bolted Langevin type (BLT) 11. The BLT 11 consists of four pieces of lead zirconate titanate (PZT) 12 of 5 cm in diameter, both sides of which are bolted together with aluminum blocks 13.

The ultrasonic emission caused by the BLT 11 transfers to the horn 8. Five horns 8 made of stainless steel are tightly connected with the five BLT 11 to give rise to a large amplitude of 17 µm and a powerful energy of more than 4 W/cm². The horn can provide a large surface area 7 and more powerful energy than only the BLT which is not connected with the horn.

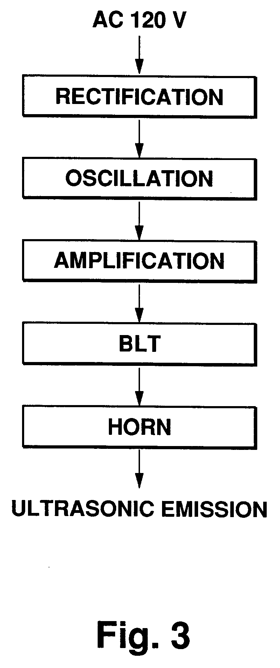

A high frequency of 21 KHz and at a level of 1000 V is supplied to the BLT. The frequency is produced through the circuits having individual functions of rectification, oscillation, and amplification as represented in Fig. 3.

The results obtained are listed in TABLE 1. It is obvious that the individual biological tissues can be rapidly dissolved. The dissolving times required for each tissue are much shorter than those by the conventional method which needs several hours.

This invention can be adopted for cleaning of the sample vial. The Inside surface of the used vial is contaminated with the radioisotopes. It is impossible to completely decontaminate them using the conventional ultrasonic washer, because of the low output energy per unit area. Such means as a reagent, high temperature, effective cavitation and large accommodation of vials are also useful for complete decontamination of many vials.

This invention is a technique to dissolve the biological tissue used for liquid scintillation measurement. Many samples of tissue can be simultaneously dissolved very rapidly using acid or alkali, cavitation caused by powerful ultrasonic emission, high temperature and large surface area of horns. The big problem in this field has been solved by this invention.

**TABLE 1**

| BIOLOGICAL TISSUE | AMOUNT | SOLVING TIME |
|---|---|---|
| MUSCLE | 284 mg | 4 Min. 80 Sec. |
| LIVER | 226 mg | 4 Min. 80 Sec. |
| SPLEEN | 213 mg | 8 Min. 00 Sec. |
| SKIN | 182 mg | 4 Min. 60 Sec. |
| HAIR | 100 mg | 8 Min. 00 Sec. |
| BONE | 174 mg | 4 Min. 60 Sec. |

## Claims

1. A method of dissolving biological tissue containing radioisotopes, which comprises:
irradiating ultrasonic waves to the biological tissue placed together with acid or alkali in a sample vial;
generating cavitation in the acid or alkali by using the ultrasonic energy of more than 2 W/cm²; and
increasing the temperature of the acid or alkali up to higher temperature than 50°C.

2. A method of dissolving biological tissue as recited in claim 1 wherein;
said sample vial is normalized for liquid scintillation measurement and made of polyethylene.

3. A method of dissolving biological tissue are recited in claim 1 wherein;
several combinations of vibrating elements with horns are connected, and the total surface area of the horns is more than 90 cm₂ which is large enough to accommodate more than 10 sample vials.
